# EUROPÄISCHE PATENTSCHRIFT

(11) **EP 3 884 768 B1**
(45) Veröffentlichungstag und Bekanntmachung des Hinweises auf die Patenterteilung: **27.11.2024**
(21) Anmeldenummer: 21163956.2
(22) Anmeldetag: 22.03.2021
(51) Int. Cl.: A01F 29/06, B24B 3/36

(54) **SCHLEIFEINRICHTUNG FÜR EINE LANDWIRTSCHAFTLICHE ERNTEMASCHINE**
GRINDING DEVICE FOR AN AGRICULTURAL HARVESTER
DISPOSITIF DE MEULAGE POUR UN ENGIN D'ABATTAGE-FAÇONNAGE AGRICOLE

(30) Priorität: 23.03.2020 DE 102020001875
(43) Veröffentlichungstag der Anmeldung: 29.09.2021
(73) Patentinhaber: Maschinenfabrik Bernard Krone GmbH & Co. KG, 48480 Spelle (DE)
(72) Erfinder: Hülsmann, Michael, 49599 Voltlage/Weese (DE)

(56) Entgegenhaltungen:
- CN-A- 105 773 326
- CN-A- 105 965 331
- CN-A- 108 907 914
- DE-A1- 102018 004 411
- GB-A- 2 026 356

## Beschreibung

Die Erfindung betrifft eine Schleifeinrichtung für eine landwirtschaftliche Erntemaschine zum Schärfen wenigstens einer eine Schneidkante aufweisenden Schneidklinge, die entlang des Umfangs eines rotierbaren Schneidklingenträgers angeordnet ist. Weiterhin betrifft die Erfindung eine landwirtschaftliche Erntemaschine, insbesondere in Form einer Häckselmaschine, die mit einer derartigen Schleifeinrichtung ausgerüstet ist.

Bei landwirtschaftlichen Erntemaschinen mit Schneidwerkzeugen hat der Zustand der Schneidklingen, insbesondere ihre Schärfe, Auswirkungen sowohl auf den Energiebedarf der Erntemaschine beim Erntevorgang als auch auf die Qualität des geschnittenen Ernteguts. Erntemaschinen wie Feldhäcksler nehmen Erntegut auf und zerkleinern dieses mithilfe eines horizontal rotierend angetriebenen Schneidwerkzeugträgers, welcher umfangseitig mit Schneidklingen versehen ist. Ein solcher Schneidwerkzeugträger wird als Messertrommel oder Häckseltrommel bezeichnet. Beim Arbeitseinsatz verschleißen die Schneidklingen und verlieren an Schärfe. Das Ausmaß des Verschleißes ist abhängig vom Erntegut. Für eine zuverlässige und energiesparende Zerkleinerung des Ernteguts ist es vorteilhaft, die Schneidklingen nach einer gewissen Ernteleistung nachzuschärfen. Hierfür sind derartige landwirtschaftliche Erntemaschinen mit entsprechenden Schleifeinrichtungen ausgestattet, die ein automatisiertes Nachschleifen ermöglichen.

Eine derartige Schleifeinrichtung ist beispielsweise aus der DE 10 2018 004 411 bekannt. Bei dieser Schleifeinrichtung ist ein Schleifmittel in einer Schleifmittelaufnahme angeordnet, die zusammen mit dem Schleifmittel verbraucht wird. Das Schleifmittel wird bei jedem Schleifzyklus, das heißt bei einer vollständigen Hin- und Herbewegung des Schleifmittels entlang der Breite des Schneidwerkzeugträgers, über ein verdrehbares Verstellrad und eine Verstellklinke in Richtung der Schneidklingen verfahren. Die Schleifmittelaufnahme ist mit einem umfangseitigen Außengewinde versehen. Die Bewegung des Schleifmittels an den Schneidklingenträger kann hierdurch sehr fein justiert werden. Es besteht allerdings die Gefahr, dass insbesondere bei Einsatz in einer landwirtschaftlichen Erntemaschine das Außengewinde durch Schmutz, Erntegutrückstände oder ähnliche Substanzen Schaden nimmt und verklemmt. Hieraus ergibt sich ein hoher Pflege- und Wartungsaufwand.

Die Druckschrift CN 105773326 A offenbart eine automatische Messerschleifeinrichtung für eine Erntemaschine, die eine horizontale Verfahreinrichtung mit einer Führungsschiene und einem Gleitklotz umfasst.

Aufgabe der vorliegenden Erfindung ist es, eine Schleifeinrichtung der eingangs genannten Art weiter zu verbessern, um insbesondere die Zuverlässigkeit beim Verfahren des Schleifmittels zu erhöhen.

Gelöst wird die Aufgabe durch eine Schleifeinrichtung, bei der die Schleifmittelaufnahme gegenüber dem Verstellrad in eine Verstellrichtung verschieblich gelagert ist und die Transporteinheit eine Gewindespindel aufweist, gegenüber der die Schleifmittelaufnahme verdrehbar und durch das Verdrehen in Verstellrichtung translatorisch verfahrbar ist.

Bei der erfindungsgemäßen Schleifeinrichtung steht die Schleifmittelaufnahme nicht über ein Außengewinde mit dem Verstellrad bzw. einem Führungsabschnitt des Verstellrades in Verbindung. Das Verstellrad und der zugehörige Führungsabschnitt bilden dabei eine Einheit. Verlagert wird die Schleifmittelaufnahme statt über ein Außengewinde am Umfang der Schleifmittelaufnahme über eine Gewindespindel mit einem Gewinde, gegenüber der die Schleifmittelaufnahme verdrehbar ist. An der Schleifmittelaufnahme ist hierzu ein entsprechendes Gegengewinde angeordnet. Alternativ kann die Schleifmittelaufnahme auch ein entsprechendes Gegengewinde ausbilden.

Durch das Verdrehen der Gewindespindel gegenüber der Schleifmittelaufnahme wird die Schleifmittelaufnahme in Verstellrichtung, das heißt in Richtung auf eine eine Schneidkante aufweisende Schneidklinge eines rotierbar antreibbaren Schneidklingenträgers verfahren. Dabei kann entweder die Gewindespindel oder die Schneidmittelaufnahme verdreht werden und das jeweils andere Bauteil festgelegt sein. Alternativ können beide Teile verdreht werden, solange eine relative Verdrehung zueinander gegeben ist. Hierüber wird eine feine Justierung der Position der Schleifmittelaufnahme bzw. des Schleifmittels ermöglicht. Insbesondere ist der Außendurchmesser der Gewindespindel geringer als der Außendurchmesser der Schleifmittelaufnahme. Ein Gewinde mit einem geringeren Durchmesser ist mit engeren Fertigungstoleranzen herstellbar. Durch die engeren Fertigungstoleranzen wird die Gefahr, dass das Gewinde verkantet oder blockiert, verringert. Die Schleifmittelaufnahme und das Verstellrad bzw. der Führungsabschnitt stehen in der erfindungsgemäßen Schleifeinrichtung in Verstellrichtung nicht in unmittelbarem Eingriff miteinander. Hierdurch wird die Gefahr eines Blockierens der Schleifeinrichtung an dieser Stelle verringert. Insgesamt ergibt sich somit eine Schleifeinrichtung, die auf besonders zuverlässige Weise verstellbar ist.

Die Schleifmittelaufnahme wird vorzugsweise zusammen mit dem in der Schneidmittelaufnahme fixierten Schleifmittel verbraucht. Die Schleifmittelaufnahme ist hierzu aus einem weichen Werkstoff gebildet, der eine gute Zerspanbarkeit aufweist. Insbesondere ist die Schleifmittelaufnahme aus einem Kunststoffmaterial ausgebildet und das Schleifmittel, insbesondere ein Schleifstein, in diese eingeklebt. Alternativ wird das Schleifmittel mit dem die Schleifmittelaufnahme bildenden Kunststoffmaterial umspritzt und so in der Schleifmittelaufnahme fixiert. Durch das Einbetten des Schleifmittels in die Schleifmittelaufnahme, insbesondere ein Einkleben bzw. Umspritzen, ergeben sich geringere Anforderungen an die Fertigungsgenauigkeit für das Schleifmittel. Es können kostengünstigere Schleifmittel zum Einsatz kommen. Das Schleifmittel wird zudem durch die Schleifmittelaufnahme geschützt. Die Gefahr von Aus- und/oder Abbrüchen von Teil- und/oder Randbereichen des Schleifmittels wird durch die Schleifmittelaufnahme verringert.

Eine erfindungsgemäße Schleifeinrichtung ermöglicht es, das Schleifmittel auf der ganzen Länge zu nutzen, ohne dass die Schleifmittelaufnahme bzw. das Schleifmittel während der Nutzungszeit des Schleifmittels manuell innerhalb des Transportschlittens versetzt werden muss. Vorzugsweise ist der maximal mögliche Verstellweg der Schleifmittelaufnahme bzw. des Schleifmittels in dem Transportschlitten größer als der Durchmesser des Schleifmittels. Hierdurch können hohe Standzeiten des Schleifmittels bzw. der Schleifmittelaufnahme von ca. 2.200 Schleifzyklen erreicht werden, ohne dass ein manuelles Versetzen erforderlich wird.

Bevorzugt weist die Transporteinheit eine Haube auf, innerhalb der die Gewindespindel angeordnet ist. Die Haube dient dem Schutz vor Verunreinigungen. Sie hält zumindest grobe Verschmutzungen von dem Transportschlitten, insbesondere der Schleifmittelaufnahme, fern. Die im Inneren der Haube angeordnete Gewindespindel ist somit weniger anfällig für Verschmutzungen. Die Gefahr, dass das Gewinde durch Verschmutzungen beeinträchtigt und/oder blockiert wird, ist durch die Anordnung der Gewindespindel innerhalb der Haube verringert. Die Haube verringert weiterhin die Gefahr, dass Fremdkörper in den Bereich zwischen Schleifmittelaufnahme und Verstellrad bzw. Führungsabschnitt gelangen und die Verfahrbarkeit beeinträchtigen.

Besonders bevorzugt weist die Transporteinheit ein zwischen der Haube und dem Verstellrad angeordnetes Dichtelement auf. Die Haube ist dabei dem Verstellrad mit dem Führungsabschnitt benachbart angeordnet und auf einer von einem rotierend antreibbaren Schneidklingenträger abweisenden Seite des Verstellrades angeordnet. Das Dichtelement zwischen der Haube und dem Verstellrad verbessert die Schutzwirkung der Haube vor Verschmutzung. Weiter besonders bevorzugt ist die Haube an dem Transportschlitten festgelegt. Hierzu weist der Transportschlitten insbesondere Fortsätze auf, die sich vom Transportschlitten über den Bereich des Verstellrades in Richtung der Haube um das Verstellrad herum erstrecken und an denen die Haube festgelegt ist. Zwischen den Fortsätzen ist das Verstellrad insbesondere für die Zustellklinke zugänglich. Die Haube und der Transportschlitten bilden eine Einheit, innerhalb derer das Verstellrad mit dem Führungsabschnitt verdrehbar gelagert ist.

Vorzugsweise ist die Gewindespindel lösbar mit der Haube verbunden und über ein von außerhalb der Haube zugängliches Einstellelement gegenüber der Haube verdrehbar. In einer Betriebssituation der Schleifeinrichtung ist die Gewindespindel innerhalb der Haube verdrehsicher festgelegt. Die Verbindung zwischen Gewindespindel und Haube ist vorzugsweise zumindest derart lösbar, dass die Gewindespindel relativ zu der Haube verdreht werden kann. Besonders bevorzugt kann die Gewindespindel zusätzlich vollständig von der Haube getrennt werden. Die Gewindespindel ist mit einem Einstellelement verbunden oder weist diese auf, welches in einer Einbausituation von außerhalb der Haube zugänglich ist und über das die Gewindespindel relativ zu der Haube verdreht werden kann. Das Einstellelement weist hierzu bevorzugt eine von außerhalb der Haube zugängliche Werkzeugaufnahme auf, insbesondere einen Innensechskant oder einen Sechskant oder einen Schlitz- oder Kreuzschlitz für einen Inbusschlüssel, einen Maulschlüssel oder einen Schraubendreher. Insbesondere bei einem Wechsel der Schleifmittelaufnahme mit dem darin fixierten Schleifmittel kann über eine lösbar mit der Haube verbundene Gewindespindel die Position der Schleifmittelaufnahme innerhalb der Transporteinheit besonders einfach und komfortabel eingestellt werden. Durch eine genaue Einstellbarkeit der Schleifmittelaufnahme kann diese so eingestellt werden, dass einerseits das Schleifmittel bei der ersten Verwendung nicht mit den Schneidklingen kollidiert und diese beschädigt und dass andererseits nur wenige Schleifzyklen mit einem Verfahren der Schleifmittelaufnahme benötigt werden, bis das Schleifmittel wieder auf die Schleifklingen zugestellt ist.

Bevorzugt sind die Schleifmittelaufnahme und das Verstellrad durch eine Nut und eine zugeordnete Nutfeder gegeneinander verdrehsicher angeordnet. Eine Verdrehsicherung in Form einer Nut und einer passenden Nutfeder gewährleistet eine translatorische Verfahrbarkeit der Schleifmittelaufnahme innerhalb des Verstellrades bzw. dem Führungsabschnitt des Verstellrades. Gleichzeitig wird erreicht, dass die Schleifmittelaufnahme mit dem darin fixierten Schleifmittel bei einem Verdrehen des Verstellrades mit verdreht wird. Hierdurch wird die Ausrichtung der Schleifmittelaufnahme mit dem darin fixierten Schleifmittel zu einem Schneidklingenträger mit den zu schärfenden Schneidklingen bei jeder Betätigung des Verstellrades und somit bei jedem Verfahren der Schleifmittelaufnahme verändert. Durch die regelmäßige Änderung der Ausrichtung des Schleifmittels zu den Schneidklingen sind immer neue Abschnitte des Schneidmittels der zu schärfenden Schneidklinge zugewandt. Die Gefahr, dass sich das Schleifmittel auf seiner den Schneidklingen zugewandten Seite mit Abrieb oder Verschmutzungen zusetzt und somit an Schleifwirkung einbüßt, wird verringert. Das Nachschleifen der Schneidklingen durch die Schleifeinrichtung erfolgt zuverlässiger.

Vorzugsweise ist die Gewindespindel als Teleskopspindel ausgebildet. Hierdurch kann auch bei beschränktem Bauraum ein großer Verfahrweg der Schleifmittelaufnahme in der Transporteinheit erreicht werden. Bei einer Einbausituation in einer landwirtschaftlichen Erntemaschine ist der zur Verfügung stehende Bauraum durch die vorgegebenen maximalen Abmessungen der Erntemaschine begrenzt. Die Verwendung einer Teleskopspindel ermöglicht einen großen Verfahrweg bei geringem Bauraum.

Bevorzugt weist die Schleifmittelaufnahme einen Aufnahmebereich für die Gewindespindel auf. Hierdurch kann der zur Verfügung stehende Bauraum optimiert ausgenutzt werden. In dem Aufnahmebereich für die Gewindespindel ist in der Schleifmittelaufnahme kein Schleifmittel angeordnet. Es ist somit vereinfacht möglich, das in der Schleifmittelaufnahme angeordnete Schleifmittel nahezu vollständig (zu mehr als 90%) zu verbrauchen. Der Aufnahmebereich stellt dabei eine Führung der Schleifmittelaufnahme bzw. des Schleifmittels innerhalb des Verstellrades bzw. dem Führungsabschnitt des Verstellrades sicher. Ein entsprechender Führungsbereich ist notwendig, damit das Schleifmittel bzw. die Schleifmittelaufnahme nicht verkantet. Diesen Führungsbereich als Aufnahmebereich für die Gewindespindel auszubilden, ermöglicht es, die Schleifeinrichtung insgesamt kompakter zu gestalten und den zur Verfügung stehenden Bauraum beispielsweise in einer landwirtschaftlichen Erntemaschine besser auszunutzen. Zudem wird die nach Verbrauch des Schleifmittels verbleibende Reststoffmenge reduziert.

Vorzugsweise weist die Transporteinheit eine lösbar mit der Schleifmittelaufnahme verbundene Verstellvorrichtung auf, wobei die Gewindespindel einen Teil der Verstellvorrichtung ausbildet. Die Verstellvorrichtung umfasst zumindest die Gewindespindel sowie das zugehörige Gegengewinde zur Verstellung der Schleifmittelaufnahme. Die Verstellvorrichtung kann zusätzlich auch ein oder mehrere Verbindungselement(e) zur Verbindung der Verstellvorrichtung bzw. der Gewindespindel mit einer Haube aufweisen und auch das von außerhalb der Haube zugängliche Einstellelement umfassen. Durch die Verwendung einer entsprechenden Verstellvorrichtung kann die Schleifmittelaufnahme einfacher ausgestaltet sein, da diese kein Gegengewinde zur Gewindespindel aufweisen muss. Das Gegengewinde ist Teil der Verstellvorrichtung. Die Verstellvorrichtung wird mit der Schleifmittelaufnahme verbunden, insbesondere verschraubt. Die Handhabung der Schleifeinheit beim Wechseln der Schleifmittelaufnahme wird erleichtert, wenn die Verstellvorrichtung die Gewindespindel und das Gegengewinde, vorzugsweise auch das Einstellelement und/oder die Verbindungselemente zur Verbindung der Gewindespindel mit der Haube in einer Baugruppe zusammenfasst.

Weiterhin ist eine landwirtschaftliche Erntemaschine, insbesondere eine Häckselmaschine, mit einem rotierend antreibbaren Schneidklingenträger, der an seinem Umfang zumindest zwei Schneidklingen aufweist und mit einer erfindungsgemäßen Schleifeinrichtung versehen ist, Gegenstand der Erfindung. Eine solche Erntemaschine ist einfacher zu bedienen, da die Schleifeinrichtung einen geringeren Reinigungs- und Wartungsaufwand erfordert und eine hohe Standzeit von ca. 2.200 Schleifzyklen aufweist, bis das Schleifmittel bzw. die Schleifmittelaufnahme mit dem darin fixierten Schleifmittel erneuert werden muss. Währenddessen benötigt die Erntemaschine insbesondere keine geplanten manuellen Eingriffe zum Nachjustieren des Schleifmittels bzw. der Schleifmittelaufnahme.

Weitere Einzelheiten der Erfindung sind der nachfolgenden Figurenbeschreibung zu entnehmen. In den schematischen Figuren zeigen:
- Fig. 1: ein Schneidwerkzeug mit einer erfindungsgemäßen Schleifeinrichtung,

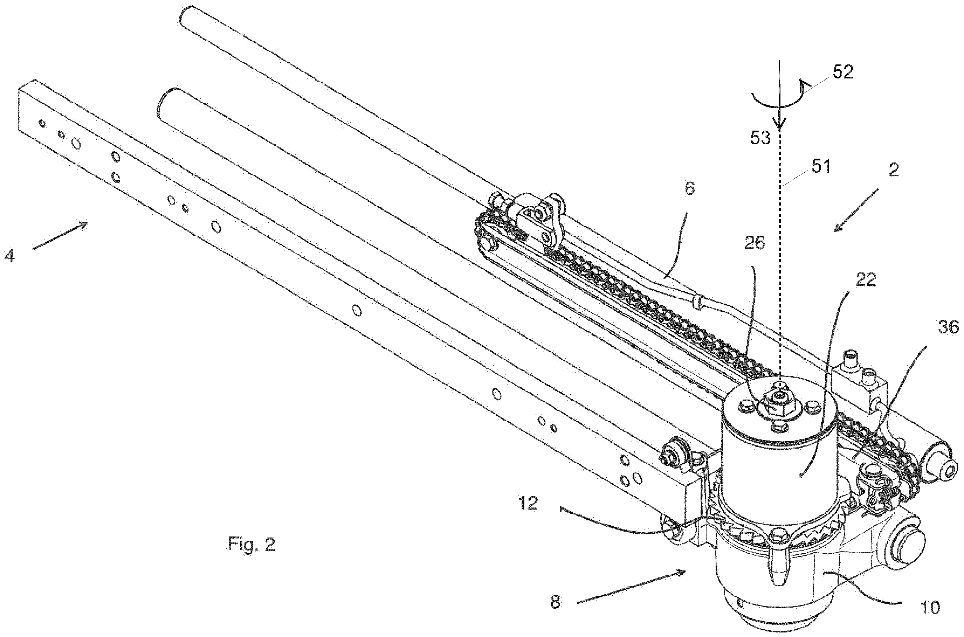

- Fig. 2: die erfindungsgemäße Schleifeinrichtung nach Fig. 1,
- Fig. 3: einen Längsschnitt durch die Transporteinheit der Schleifeinrichtung nach Fig. 1, mit einem noch unbenutzten Schleifmittel in der Schleifmittelaufnahme,
- Fig. 4: einen Längsschnitt durch die Transporteinheit entsprechend Fig. 3 mit einer um die Hälfte des maximalen Verfahrweg verfahrenen Schleifmittelaufnahme mit entsprechend teilweise verbrauchtem Schleifmittel,
- Fig. 5: einen Längsschnitt durch die Transporteinheit entsprechend Fig. 3 mit einer um den maximalen Verfahrweg verfahrenen Schleifmittelaufnahme und entsprechend fast vollständig verbrauchtem Schleifmittel,
- Fig. 6: einen Querschnitt durch die Transporteinheit nach Fig. 1.

Gleich oder ähnlich wirkende Teile sind, sofern dienlich, mit identischen Bezugsziffern versehen. Einzelne technische Merkmale der nachfolgend beschriebenen Ausführungsbeispiele können mit den Merkmalen des Anspruchs 1 sowie mit den Merkmalen einzelner vorbeschriebener Ausführungsbeispielen zu erfindungsgemäßen Gegenständen kombiniert werden.

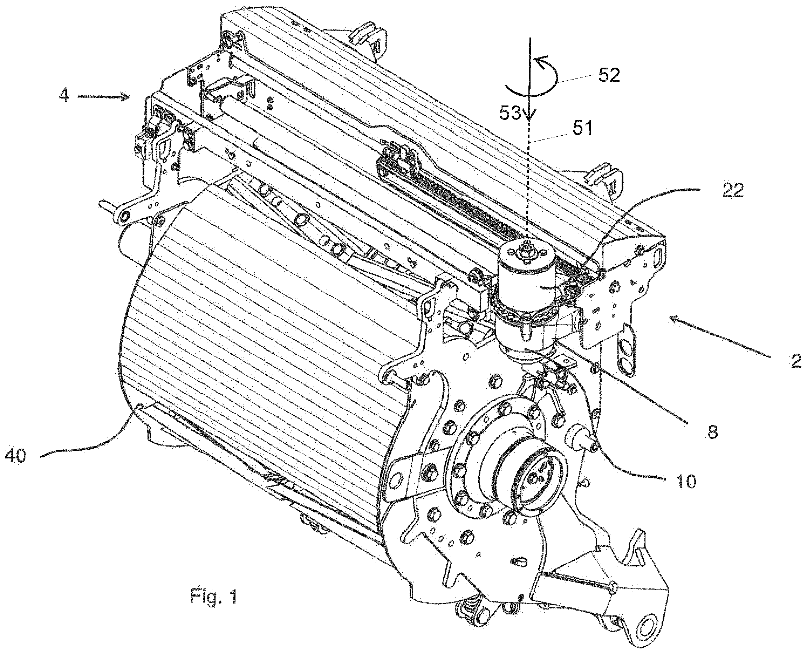

Fig. 1 zeigt eine Schneideinrichtung mit einer erfindungsgemäßen Schleifeinrichtung 2. Die Schneideinrichtung weist einen Schneidklingenträger 40 mit umfangseitig am Schneidklingenträger 40 angeordneten Schneidklingen auf. Die Schneideinrichtung umfasst zudem eine erfindungsgemäße Schleifeinrichtung 2. Über die Schleifeinrichtung 2 können die Schneidklingen der Schneideinrichtung nachgeschärft werden. Hierzu wird der Schneidklingenträger 40 angetrieben. Die Schneidkanten der Schneidklingen beschreiben hierdurch eine zylindrische Form, welche um eine horizontale Rotationsachse des Schneidklingenträgers 40 rotiert. Parallel zur Rotationsachse des Schneidklingenträgers 40 verfährt die Schleifeinrichtung 2 entlang der Schneidklingen. Ein Aktor 6 verfährt eine Transporteinheit 8 entlang einer Geradführung 4. Die Geradführung 4 umfasst eine Schiene und eine Gleitwelle. Die Transporteinheit 8 umfasst einen Transportschlitten 10 und ein Verstellrad 12. Die Transporteinheit 8 wird während eines Schleifvorgangs einmal über die Länge der Geradführung 4 auf und ab gefahren. Beim Erreichen der Ausgangsposition wird über eine Zustellklinke 36 das Verstellrad 12 bewegt. Hierdurch wird eine Schleifmittelaufnahme 16 gegenüber einer Gewindespindel 20 der Transporteinheit 8 gegeneinander verdreht. Die Schleifmittelaufnahme 16 mit einem darin fixierten Schleifmittel 18 wird dabei in Richtung des Schneidklingenträgers 40 verfahren, was auch als Zustellen bezeichnet wird. Diese Richtung ist hier als Verstellrichtung 53 bezeichnet. Das Schleifmittel 18 gelangt in Kontakt mit den rotierenden Schneidklingen und schleift diese nach.

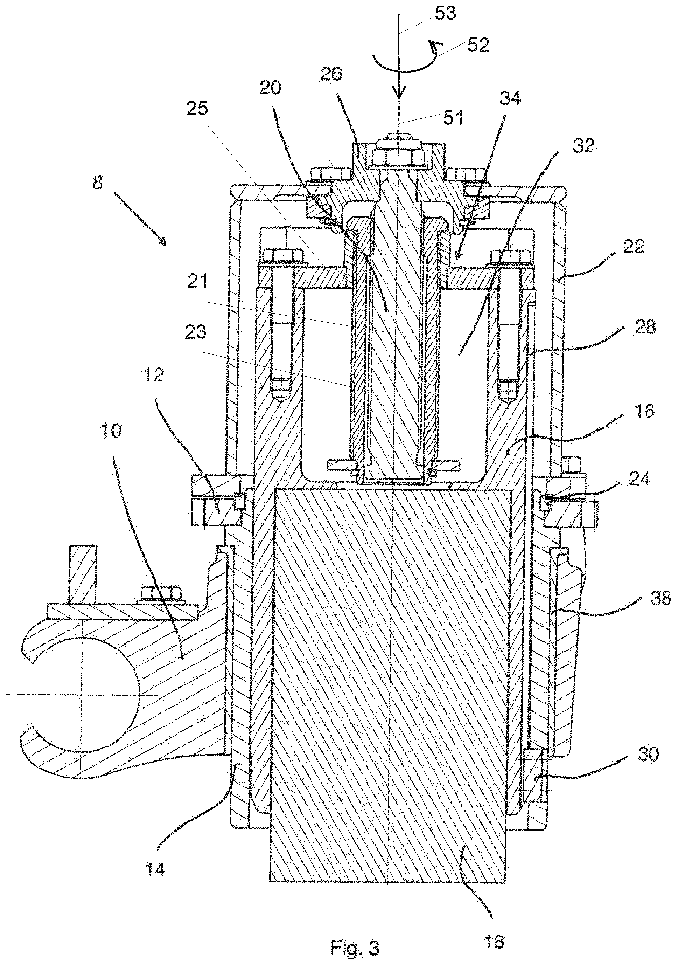

Fig. 3 zeigt einen detaillierten Querschnitt der Transporteinheit 8. Der Transportschlitten 10 der Transporteinheit 8 weist einen Durchgang auf, in dem eine Gleitbuchse 38 angeordnet ist. Innerhalb der Gleitbuchse 38 ist ein Verstellrad 12 mit einem Führungsabschnitt 14 angeordnet, das seinerseits ebenfalls einen Durchgang aufweist. Vorliegend sind Verstellrad 12 und Führungsabschnitt 14 einteilig ausgebildet. Die Oberseite der Transporteinheit 8 wird durch eine Haube 22 abgedeckt, die mittels eines Dichtelements 24 gegenüber dem Verstellrad 12 abgedichtet ist.

Im Inneren des Verstellrads 12 ist die Schleifmittelaufnahme 16 angeordnet, in der das Schleifmittel 18 fixiert ist. In dem Ausführungsbeispiel ist die Schleifmittelaufnahme 16 aus einem Kunststoffmaterial gefertigt. Das Schleifmittel 18 wird bei der Herstellung der Schleifmittelaufnahme 16 mit dem Kunststoffmaterial umspritzt und so fixiert. Die Schleifmittelaufnahme 16 kann jedoch alternativ auch aus anderen, vorzugsweise weichen und gut zerspanbaren Materialien gefertigt sein. Das Schleifmittel 18 kann alternativ in die Schleifmittelausnahme 16 geklebt werden, insbesondere unter Verwendung eines Epoxidharzes.

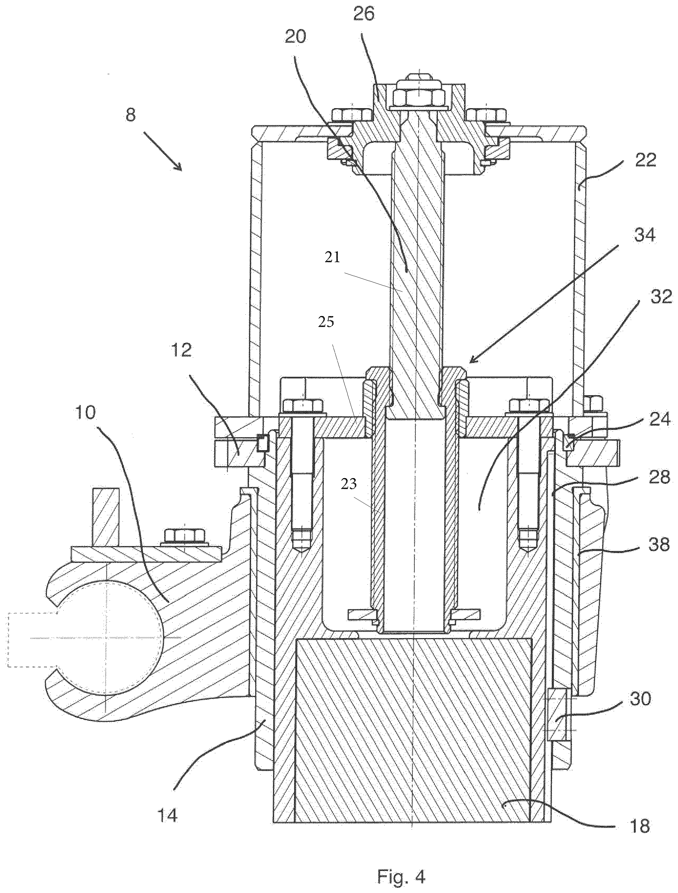

Die Schleifmittelaufnahme 16 weist eine Nut 28 auf (Fig. 4), die mit einer zugehörigen Nutfeder 30 zusammenwirkt. Die Nutfeder 30 ist teilweise in einer Ausnehmung des Verstellrads 12 bzw. dessen Führungsabschnitt 14 angeordnet. Nut 28 und Nutfeder 30 legen Schleifmittelaufnahme 16 und Verstellrad 12 bzw. Führungsabschnitt 14 zueinander gegen Verdrehen fest. Eine translatorische Bewegung der Schleifmittelaufnahme 16 gegenüber dem Verstellrad 12 bzw. dem Führungsabschnitt 14 bleibt hierbei gewährleistet. Führungsabschnitt 14 und Schleifmittelaufnahme 16 weisen im Übrigen glatte Mantelflächen auf. Zwischen Führungsabschnitt 14 und Schleifmittelaufnahme 16 sind keine miteinander im Eingriff stehenden Gewinde vorgesehen.

An der Haube 22 und an der Schleifmittelaufnahme 16 ist eine Verstellvorrichtung 34 angeordnet. Diese weist eine Gewindespindel 20 auf, die vorliegend als Teleskopgewinde ausgebildet ist. Weiterhin weist die Verstellvorrichtung 34 ein zu einem Gewinde der Gewindespindel 20 komplementäres Gegengewinde auf. Diese Gewinde sind vorzugsweise als Linksgewinde ausgebildet. Hierdurch wird ein Einstellen der Position Schleifmittelaufnahme 16 bzw. des Schleifmittels 18 relativ zu dem Transportschlitten 10 für einen Bediener der Schleifeinrichtung 2 erleichtert.

Die Verstellvorrichtung 34 ist einenends an der Schleifmittelaufnahme 16 angeordnet, vorliegend insbesondere verschraubt. Die Schleifmittelaufnahme 16 weist einen Aufnahmebereich 32 auf, in dem die Gewindespindel 20 der Verstellvorrichtung 34 in einem unverbrauchten Zustand gemäß Fig. 3 (neue Schleifmittelaufnahme 16 und Schleifmittel 18) angeordnet werden kann. Anderenends ist die Verstellvorrichtung 34 an der Haube 22 festgelegt. Die Haube 22 weist hierfür eine Durchgangsöffnung auf, durch die ein Teil der Verstellvorrichtung 34 hindurchgeführt wird. Hierdurch wird ein Einstellelement 26, das vorliegend beispielhaft als ein zur Verwendung mit beispielsweise einem Maulschlüssel ausgebildeter Sechskant ausgebildet ist, von außerhalb der Haube 22 zugänglich. Die Verstellvorrichtung 34 ist an dieser Stelle über einen Klemmring gegenüber der Haube 22 drehbar, wenn die Schraubverbindungen zwischen Haube 22 und Verstellvorrichtung 34 gelockert werden. Über das Einstellelement 26 kann die Gewindespindel 20 gegenüber der Haube 22 und der Schleifmittelaufnahme 16, die durch Nut 28 und Nutfeder 30 relativ zum Verstellrad 12 gegen ein Verdrehen gesichert ist, verdreht werden. Hierdurch ist es möglich, die genaue Höhe der mit der Verstellvorrichtung 34 verbundenen Schleifmittelaufnahme 16 relativ zum Transportschlitten 10 einzustellen. Der Wechsel der Schleifmittelaufnahme 16, insbesondere wenn das Schleifmittel 18 nahezu vollständig verbraucht ist, ist somit einfach möglich.

Die Schleifeinrichtung 2, insbesondere die Schleifmittelaufnahme 16, das Verstellrad 12, der Führungsabschnitt 14, die Verstellvorrichtung 34, die Gewindespindel 20, die Gleitbuchse 38 und/oder die Haube 22, erstrecken sich konzentrisch zu einer Verstellachse 51. Dabei umgibt der Führungsabschnitt 14 die Schleifmittelaufnahme 16 vollumfänglich. Durch die verdrehsichere Anordnung der Schleifmittelaufnahme16 im Führungsabschnitt 14 wird diese beim Drehen des Verstellrades 12 mit diesem gedreht. Weiterhin ist die Gewindespindel 20 an einer Oberseite der Haube 22 befestigt. Sie erstreckt sich von dieser ausgehend in einem Innenraum der Haube 22 hinein.

Die Gewindespindel 20 weist einen inneren Spindelteil 21 sowie einen äußeren Spindelteil 23 auf. Der innere Spindelteil 21 ist als Vollkörper ausgebildet. Er weist ein Außengewinde auf. Der äußere Spindelteil 23 ist als Hohlkörper, insbesondere zylinderförmig, ausgebildet. Erweist ein Innengewinde auf. Das Außengewinde des inneren Spindelteils 21 und das Innengewinde des äußeren Spindelteils 23 sind miteinander in Eingriff und relativ zueinander verdrehbar. Am äußeren Spindelteil 23 ist zudem ein Außengewinde angeordnet, das zu dem Gegengewinde der Verstellvorrichtung 34 korrespondierend ausgebildet und mit diesem in Eingriff ist. Das Gegengewinde ist an einem Anschlussbauteil 25 angeordnet, an dem die Schleifmittelaufnahme 16 befestigt, insbesondere angeschraubt, ist. Dadurch sind der äußere Spindelteil 23 und die Schleifmittelaufnahme 16 relativ zueinander drehbar.

Fig. 4 zeigt die Transporteinheit 8 in einem teilverbrauchten Zustand, in dem die Schleifmittelaufnahme 16 bzw. die Gewindespindel 20 der Verstellvorrichtung 34 um etwa die Hälfte des maximal möglichen Verstellweges verfahren wurde. Ein großer Teil des Schleifmittels 18 sowie ein Teil der das Schleifmittel 18 umgebenden Schleifmittelaufnahme 16 sind durch Schleifvorgänge abgetragen worden. Ein Teil des Teleskopgewindes der Verstellvorrichtung 34 ist in Fig. 4 vollständig ausgefahren dargestellt. Die genaue Verteilung, welcher Teil eines Teleskopgewindes wie weit verstellt wird, hängt von den jeweils vorherrschenden Bedingungen ab, insbesondere der jeweiligen Reibung zwischen den einzelnen Bestandteilen des Teleskopgewindes.

Im unverbrauchten Zustand ist der innere Spindelteil 21 im äußeren Spindelteil 23 angeordnet. Der innere Spindelteil 21 ist daher im äußeren Spindelteil 23 eingezogen. Zudem ist im unverbrauchten Zustand der äußeren Spindelteil 23 im Aufnahmebereich 32 der Schleifmittelaufnahme 16 angeordnet. Die Gewindespindel 20 ist daher in der Schleifmittelaufnahme 16 eingezogen.

Im vorliegenden Ausführungsbeispiel ist die Reibung zwischen den Gewinden der Spindelteile 21, 23 und des Gegengewindes so aufeinander abgestimmt, dass durch Drehen des Verstellrades 12 in eine Umfangsrichtung 52 um die Verstellachse 51 der Schleifeinrichtung 2 zunächst der äußere Spindelteil 23 entlang dem inneren Spindelteil 21 verdreht wird. Dadurch wird der innere Spindelteil 21 aus dem äußeren Spindelteil 23 ausgezogen. Dabei wird der äußere Spindelteil 23, und mit ihm die Schleifmittelaufnahme 16, in Verstellrichtung 53 um einen Verstellweg verstellt. Erst wenn der äußere Spindelteil 23 etwa vollständig entlang dem inneren Spindelteil 21 verstellt ist, wird das Gegengewinde entlang dem äußeren Spindelteil 23 verdreht. Dadurch wird der äußere Spindelteil 23 aus der Schleifmittelaufnahme 16 ausgezogen. Auch dabei wird die Schleifmittelaufnahme 16 in Verstellrichtung 53 um einen Verstellweg verstellt.

Eine Länge der Spindelteile 21, 23 der Gewindespindel 20 sowie der Schleifmittelaufnahme 16 sind so aufeinander abgestimmt, dass das Schleifmittel 18 bei maximal möglichem Verstellweg nahezu vollständig verbraucht ist.

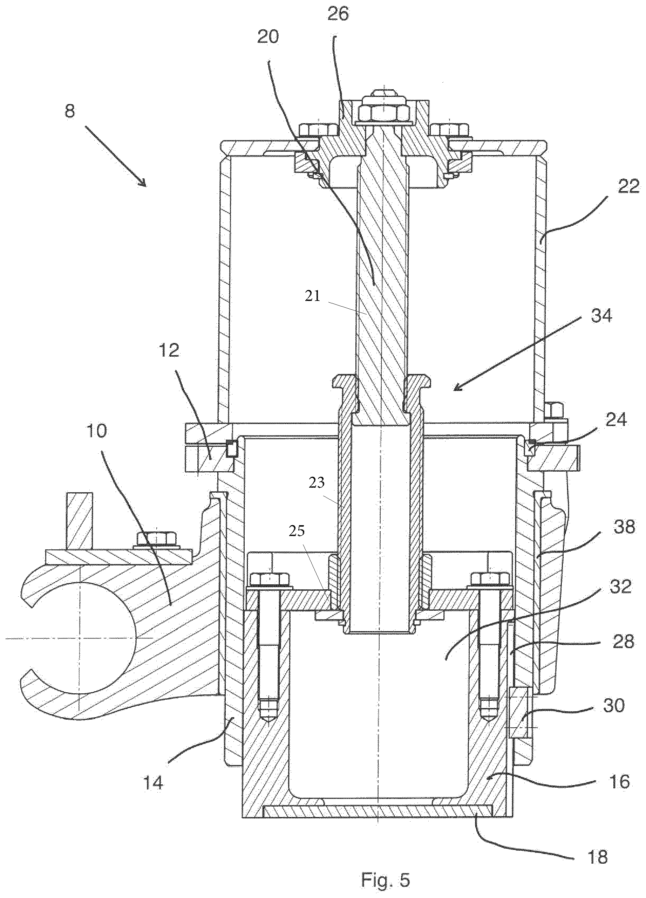

Fig. 5 zeigt die Transporteinheit 8 in einem verbrauchten Zustand, wobei die Schleifmittelaufnahme 16 um den maximal möglichen Verstellweg verstellt wurde.

Das Schleifmittel 18 ist in Fig. 5 fast vollständig verbraucht und die Schleifmittelaufnahme 16 ist gegen eine neue Schleifmittelaufnahme 16 zu tauschen, die dann entsprechend Fig. 3 in der Transporteinheit 8 anzuordnen ist.

Hierzu wird die Verstellvorrichtung 34 von der Haube 22 und der verbrauchten Schleifmittelaufnahme 16 gelöst und mit einer neuen Schleifmittelaufnahme 16 verbunden. Vorliegend sind hierzu entsprechende Schraubverbindungen vorgesehen. Anschließend wird die neue Schleifmittelaufnahme 16 mit dem neuen Schleifmittel 18 in den Transportschlitten 10 eingesetzt und wieder mit der Haube 22 verbunden. Die genaue Höhe der Schleifmittelaufnahme 16 bzw. des Schleifmittels 18 in der Transporteinheit 8 kann über das Einstellelement 26 eingestellt werden. Anschließend wird die Verstellvorrichtung 34 über Schraubverbindungen und einen Klemmring an der Haube 22 verdrehsicher festgelegt.

In der Position gemäß Fig. 5 wird der verbliebene Rest des Schleifmittels 18 durch die Schleifmittelaufnahme 16, insbesondere im Aufnahmebereich 32 innerhalb des Führungsbereiches 14 gegen ein Verkanten gesichert und somit sicher geführt. Dieser verbliebene Bereich der Schleifmittelaufnahme 16 wird nach dem Austausch der Schleifmittelaufnahme 16 entsorgt. Ein entsprechender Aufnahmebereich 32 reduziert den bei dem Austausch von Schleifmittelaufnahme 16 bzw. Schleifmittel 18 anfallenden Reststoff. Es verbleibt nur sehr wenig Schleifmittel 18, vorzugsweise weniger als 10 % des ursprünglich in der Schleifmittelaufnahme 16 vorhandenen Schleifmittels 18. Da das Material der Schleifmittelaufnahme 16 typischerweise kostengünstiger ist als das Schleifmittel 18, ergeben sich somit Kostenersparnisse.

Insgesamt kann somit mit einer erfindungsgemäßen Schleifvorrichtung 2 fast das gesamte in einer Schleifmittelaufnahme 16 vorhandene Schleifmittel 18 verwendet werden, ohne dass ein manueller Eingriff zum Nachstellen oder Nachjustieren des Schleifmittels in der Schleifeinrichtung 2 notwendig ist. Die als Teleskopgewinde ausgebildete Gewindestange 20 ermöglicht es, bei gleichem Bauraum eine Schleifmittelaufnahme 16 mit mehr Schleifmittel 18 in die Transporteinheit 8 aufzunehmen. Hierdurch werden die Einsatzzeiten einer entsprechenden Schleifeinrichtung 2 zwischen den notwendigen manuellen Eingriffen für das Wechseln des Schleifmittels 18 bzw. der Schleifmittelaufnahme 16 vergrößert. Alternativ wird, bei der gleichen zu verwendenden Menge an Schleifmittel 16, der Bauraum, der für eine entsprechende Schleifeinrichtung 2 zur Verfügung stehen muss, verringert. Dies ist besonders vorteilhaft bei der Verwendung der erfindungsgemäßen Schleifeinrichtung 2 in landwirtschaftlichen Erntemaschinen, insbesondere Häckselmaschinen.

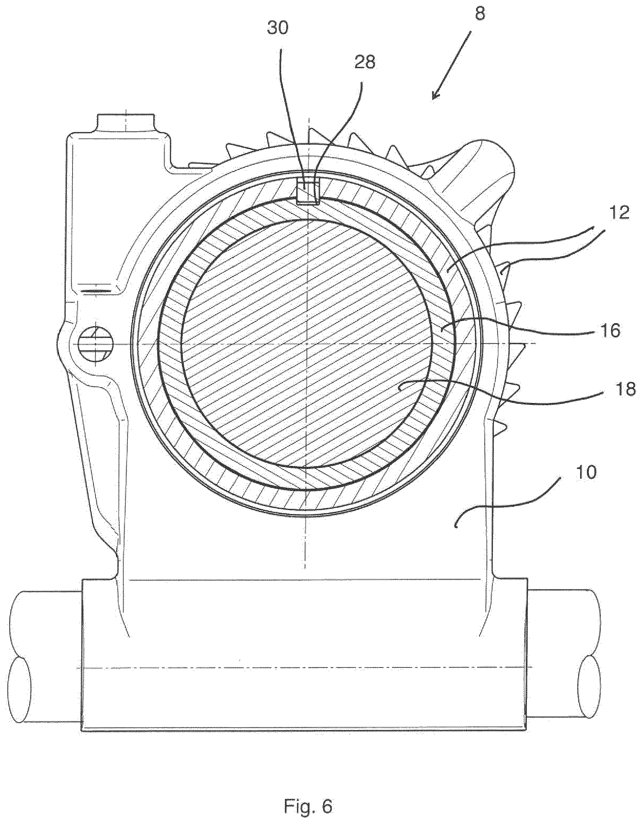

Fig. 6 zeigt einen Querschnitt durch die Transporteinheit 8. Zu erkennen sind wiederum der Transportschlitten 10, das Verstellrad 12 mit dem entsprechenden Führungsbereich 14 sowie die Schleifmittelaufnahme 16 mit dem darin angeordneten Schleifmittel 18. Weiterhin sind die Nut 28 und die zugehörige Nutfeder 30 zu sehen, mit der das Verstellrad 12 und die Schleifmittelaufnahme 16 verdrehsicher zueinander festgelegt sind. Diese stellen sicher, dass bei einem Verdrehen des Verstellrades 12 über die Verstellklinke 36 nach einem Schleifzyklus auch das Schleifmittel 18 um einen gewissen Abschnitt, insbesondere ein Zweiunddreißigstel eines Vollkreises, gedreht wird. Hierdurch wird erreicht, dass bei jedem Schleifzyklus ein neuer Abschnitt des Schleifmittels 18 in Richtung der zu schleifenden Schneidklingen ausgerichtet ist. Dies reduziert eine Verminderung der Schleifleistung durch ein etwaiges Zusetzen des Schleifmittels 18 mit Abrieb oder Verschmutzungen. Mit der erfindungsgemäßen Schleifeinrichtung 2 können somit ca. 2.200 Schleifzyklen ohne einen manuellen Eingriff durchgeführt werden.

## Patentansprüche

1. Schleifeinrichtung (2) für eine landwirtschaftliche Erntemaschine zum Schärfen wenigstens einer, eine Schneidkante aufweisenden Schneidklinge, die entlang des Umfangs eines rotierbar antreibbaren Schneidklingenträgers (40) angeordnet ist, wobei die Schleifeinrichtung (2) eine Transporteinheit (8) mit einem Transportschlitten (10) umfasst und in dem Transportschlitten (10) ein gegenüber dem Transportschlitten (10) verdrehbares Verstellrad (12) mit einem Führungsabschnitt (14) angeordnet ist, in dem eine Schleifmittelaufnahme (16) mit einem darin fixierten Schleifmittel (18) verfahrbar angeordnet ist, **dadurch gekennzeichnet, dass** die Schleifmittelaufnahme (16) gegenüber dem Verstellrad (12) in einer Verstellrichtung (53) verschieblich gelagert ist und die Transporteinheit (8) eine Gewindespindel (20) aufweist, gegenüber der die Schleifmittelaufnahme (16) verdrehbar und durch das Verdrehen in Verstellrichtung (53) translatorisch verfahrbar ist.

2. Schleifeinrichtung (2) nach Anspruch 1, **dadurch gekennzeichnet, dass** die Transporteinheit (8) eine Haube (22) aufweist, innerhalb derer die Gewindespindel (20) angeordnet ist.

3. Schleifeinrichtung (2) nach Anspruch 2, **dadurch gekennzeichnet, dass** die Transporteinheit (8) ein zwischen der Haube (22) und dem Verstellrad (12) angeordnetes Dichtelement (24) aufweist.

4. Schleifeinrichtung (2) nach Anspruch 2 oder 3, **dadurch gekennzeichnet, dass** die Haube (22) an dem Transportschlitten (10) festgelegt ist.

5. Schleifeinrichtung (2) nach einem der Ansprüche 2 bis 4, **dadurch gekennzeichnet, dass** die Gewindespindel (20) lösbar mit der Haube (22) verbunden und über ein von außerhalb der Haube (22) zugängliches Einstellelement (26) gegenüber der Haube (22) verdrehbar ist.

6. Schleifeinrichtung (2) nach einem der vorhergehenden Ansprüche, **dadurch gekennzeichnet, dass** die Schleifmittelaufnahme (16) und das Verstellrad (12), insbesondere durch eine Nut (28) und eine zugeordnete Nutfeder (30), gegeneinander verdrehsicher angeordnet sind.

7. Schleifeinrichtung (2) nach einem der vorhergehenden Ansprüche, **dadurch gekennzeichnet, dass** die Gewindespindel (20) als Teleskopspindel ausgebildet ist.

8. Schleifeinrichtung (2) nach einem der vorhergehenden Ansprüche, **dadurch gekennzeichnet, dass** die Schleifmittelaufnahme (16) einen Aufnahmebereich (32) für die Gewindespindel (20) aufweist.

9. Schleifeinrichtung (2) nach einem der vorhergehenden Ansprüche, **dadurch gekennzeichnet, dass** die Transporteinheit (8) eine lösbar mit der Schleifmittelaufnahme (16) verbundene Verstellvorrichtung (34) aufweist und die Gewindespindel (20) einen Teil der Verstellvorrichtung (34) ausbildet.

10. Landwirtschaftliche Erntemaschine, insbesondere Häckselmaschine, mit einem rotierend antreibbaren Schneidklingenträger (40), der an seinem Umfang zumindest zwei Schneidklingen aufweist, **dadurch gekennzeichnet, dass** die Erntemaschine eine Schleifeinrichtung (2) gemäß einem der Ansprüche 1 bis 9 aufweist.

## Claims

1. Grinding device (2) for an agricultural harvesting machine, which device is intended for sharpening at least one cutting blade having a cutting edge, which blade is arranged along the circumference of a rotatably drivable cutting blade carrier (40), the grinding device (2) comprising a transport unit (8) having a transport carriage (10), and an adjusting wheel (12) that is rotatable relative to the transport carriage (10) and has a guide portion (14) being arranged in the transport carriage (10), in which guide portion an abrasive material receptacle (16) having an abrasive material (18) fixed therein is movably arranged, **characterized in that** the abrasive material receptacle (16) is mounted so as to be displaceable relative to the adjusting wheel (12) in an adjustment direction (53), and the transport unit (8) has a threaded spindle (20) relative to which the abrasive material receptacle (16) can be rotated and can be moved in translation by the rotation in the adjustment direction (53).

2. Grinding device (2) according to claim 1, **characterized in that** the transport unit (8) has a hood (22) within which the threaded spindle (20) is arranged.

3. Grinding device (2) according to claim 2, **characterized in that** the transport unit (8) has a sealing element (24) arranged between the hood (22) and the adjusting wheel (12).

4. Grinding device (2) according to claim 2 or 3, **characterized in that** the hood (22) is fixed to the transport carriage (10).

5. Grinding device (2) according to any of claims 2 to 4,
**characterized in that** the threaded spindle (20) is detachably connected to the hood (22) and can be rotated relative to the hood (22) via a setting element (26) that is accessible from outside the hood (22).

6. Grinding device (2) according to any of the preceding claims,
**characterized in that** the abrasive material receptacle (16) and the adjusting wheel (12) are arranged so as to be secured against rotation relative to one another, in particular by means of a groove (28) and an associated groove spring (30).

7. Grinding device (2) according to any of the preceding claims, **characterized in that** the threaded spindle (20) is designed as a telescopic spindle.

8. Grinding device (2) according to any of the preceding claims, **characterized in that** the abrasive material receptacle (16) has a receiving region (32) for the threaded spindle (20).

9. Grinding device (2) according to any of the preceding claims, **characterized in that** the transport unit (8) has an adjustment apparatus (34) detachably connected to the abrasive material receptacle (16), and the threaded spindle (20) forms part of the adjustment apparatus (34).

10. Agricultural harvesting machine, in particular a chaff cutting machine, comprising a rotatably drivable cutting blade carrier (40) which has at least two cutting blades on its circumference, **characterized in that** the harvesting machine has a grinding device (2) according to any of claims 1 to 9.

## Revendications

1. Installation d'affûtage (2) pour une moissonneuse agricole, pour affûter au moins une lame de coupe ayant une arête de coupe et qui est installée le long de la périphérie d'un porte-lames de coupe (40) entrainé en rotation,
- l'installation d'affûtage (2) comprend une unité de transport (8) avec un chariot (10) et qui comporte une roue de réglage (12)rotative par rapport au chariot (10) et avec un segment de guidage (14) dans lequel un support d'organe d'affûtage (16) peut se déplacer avec l'organe d'affûtage (18) qu'il porte,
**caractérisée en ce que**
le support d'organe d'affûtage (16) est monté coulissant par rapport à la roue de réglage (12) dans une direction de réglage (53) et l'unité de transport (8) a une broche filetée (20) qui tourne par rapport au support d'organe d'affûtage (16) et qui est mobile en translation par la rotation dans la direction de réglage (53).

2. Installation d'affûtage (2) selon la revendication 1,
**caractérisé en ce que**
l'unité de transport (8) a un capot (22) recevant la broche filetée (20).

3. Installation d'affûtage (2) selon la revendication 2,
**caractérisée en ce que**
l'unité de transport (8) a un élément d'étanchéité (24) entre le capot (22) et la roue de réglage (12).

4. Installation d'affûtage (2) selon la revendication 2 ou 3,
**caractérisée en ce que**
le capot (22) est fixé au chariot (10).

5. Installation d'affûtage (2) selon l'une des revendications 2 à 4, **caractérisée en ce que**
la broche filetée (20) est reliée de manière amovible au capot (22) et elle est entrainée en rotation par rapport au capot (22) par un élément de réglage (26) accessible de l'extérieur du capot (22).

6. Installation d'affûtage (2) selon l'une des revendications précédentes, **caractérisée en ce que**
le support d'organe d'affûtage (16) et la roue de réglage (12) sont bloqués en rotation l'un par rapport à l'autre notamment par une rainure (28) et une clavette (30).

7. Installation d'affûtage (2) selon l'une des revendications précédentes, **caractérisée en ce que**
la broche filetée (20) est une broche télescopique.

8. Installation d'affûtage (2) selon l'une des revendications précédentes, **caractérisée en ce que**
le support d'organe d'affûtage (16) a une zone de réception (32) pour la broche filetée (20).

9. Installation d'affûtage (2) selon l'une des revendications précédentes, **caractérisée en ce que**
l'unité de transport (8) a un dispositif de réglage (34) relié de manière amovible au support d'organe d'affûtage (16) et la broche filetée (20) fait partie du dispositif de réglage (34).

10. Moissonneuse agricole notamment hacheuse, comportant un support de lames (40) entrainé en rotation et dont la périphérie a au moins deux lames de coupe,
moissonneuse **caractérisée en ce que**
elle est équipée d'installation d'affûtage (2) selon l'une des revendications 1 à 9.
